# EUROPEAN PATENT SPECIFICATION

(11) **EP 1 347 617 B1**
(45) Date of publication and mention of the grant of the patent: **26.07.2006**
(21) Application number: 03251680.9
(22) Date of filing: 18.03.2003
(51) Int. Cl.: H04L 29/06, G06Q 30/00

(54) **Method, computer, and program for content retrieval and payment**
Verfahren, Rechner, und Rechnerprogramm für die Übertragung und Bezahlung von Dateninhalten
Méthode, ordinateur et programme de transmission et paiement de contenu

(30) Priority: 19.03.2002 JP 2002076773
(43) Date of publication of application: 24.09.2003
(73) Proprietor: SONY CORPORATION, Tokyo 141 (JP)
(72) Inventor: Ukita, Masakazu, c/o Sony Corporation, Tokyo (JP)
(74) Representative: DeVile, Jonathan Mark

(56) References cited:
- WO-A-02/05064
- HORNE B ET AL: "Escrow services and incentives in peer-to-peer networks" EC'01. PROCEEDINGS OF THE 3RD. ACM CONFERENCE ON ELECTRONIC COMMERCE. TAMPA, FL, OCT. 14 - 17, 2001, ACM CONFERENCE ON ELECTRONIC COMMERCE, NEW YORK, NY: ACM, US, vol. CONF. 3, 14 October 2001 (2001-10-14), pages 85-94, XP002248537 ISBN: 1-58113-387-1
- GRIMM R ET AL: "Peer-to-peer music-sharing with profit but without copy protection" PROCEEDINGS OF THE SECOND INTERNATIONAL CONFERENCE ON WEB DELIVERING OF MUSIC, 9 December 2002 (2002-12-09), pages 17-22, XP010626940

## Description

### BACKGROUND OF THE INVENTION

### 1. Field of the invention

The present invention relates to communication methods, computers and computer programs for use in transmitting content data from a content provider.

### 2. Description of the Related Art

The general demand for widely distributing music, still images, moving pictures, computer programs, novels, poems, and other content on the Internet is increasing more and more. At this time, while desiring use of the content of one's own work by more people, there is a demand that some sort of profit be obtained from such work.

In a peer-to-peer file exchange service on a network, a file is placed in the computer of a service user connected to the network and that file is exchanged via the network. That is, the person who provides the file on the network does not have to place the file in a specific server on the network, therefore there is the advantage that it is not necessary to prepare a storage device for storing a large amount of files or an expensive network apparatus for processing network access concentrating at the server. For this reason, there is a possibility that the peer-to-peer file exchange service can satisfy the above general demand.

However, the digitalized data on the Internet, including the data of the files exchanged by the conventional peer-to-peer file exchange service, can be easily copied by anyone. Therefore, the provider of the content cannot obtain profit so far as the file exchange and copying are carried out at a place where the provider is not involved.

Simultaneously, there are cases where a true provider of content included in a file becomes unable to be determined.

Therefore, the content provider who wants to secure profit by preventing copying has to prepare some special mechanism for preventing unrestricted copying and provide the content to the Internet on that mechanism. In many cases, however, there is a problem in that the special mechanism becomes an obstacle for providing the content to many users.

On the other hand, due to the peer-to-peer file exchange service etc., even if satisfied with the content and wanting to pay a charge or make a contribution to the content provider, the content user using content provided on the Internet cannot easily pay the charge and is forced to give up since there is no means for easily specifying the true provider of the content.

Further, the user of the content could not easily determine in advance if a file obtained from the Internet by for example peer-to-peer file exchange etc. included a computer virus, socially unsuitable content, content not desired by oneself, or the like before actually using the content. For this reason, he or she could not feel safe about using the content.

In an article entitled "Escrow Services and incentives in peer-to-peer networks" EC'01 proceedings of the 3^{rd} ACM conference on Electronic Commerce, Tampa, Florida, October 14-17 2001, ISBN:1-58113-387-1, a system is disclosed in which a sender computer system and a receiving computer system communicate content data in an encrypted form using a peer-to-peer communication.

The exchange of the content data and the payment for the use of the content data is made via an escrow server (third computer). The computer sends an encrypted version of the content data to the receiving computer in encrypted form. In order to obtain the key for decrypting the content, the receiving computer generates a hash of the encrypted content and sends this hash to the escrow server together with a description of the content data which it desires to obtain. The receiving computer also sends payment for the content data. The escrow server compares the hash received from the receiving computer with a hash value of the encrypted content pre-stored therein. If the hash values are verified as being the same, the escrow server verifies that the payment has been made by the receiving computer and once confirmed sends the receiving server the key for decrypting the content data.

### SUMMARY OF THE INVENTION

Various aspects and features of the present invention are defined in the appended claims.

Embodiments of the present invention can provide a communication method, a computer, and a program enabling one to suitably pay a charge to a content data provider even when the content data is provided on the network by the peer-to-peer system.

According to a first aspect of the present invention, there is provided a method for communicating content data from a first computer of a content provider to a second computer of a content user in accordance with a peer-to-peer communication, the method comprising
registering personal management data concerning said content user with a third computer, said personal management data concerning said content user being communicated from said second computers to said third computer,
registering personal management data concerning said content provider and content management data concerning said content data with said third computer, said personal management data concerning said content provider and said content management data being communicated from said first computer to said third computer the content management data including hash key data of said content data generated using a predetermined hash function as verification data indicating the legitimacy of the content data provided by said content provider, and
communicating said content data from said first computer of said content provider to said second computer of said content user in accordance with the peer-to-peer communication,
receiving from said second computer of said content user at said third computer an inquiry request, which includes hash key data generated by said second computer in accordance with said predetermined hash function,
verifying by said third computer the legitimacy of said content data by using said registered hash key data in response to said inquiry request,
transmitting the result of the related verification to said second computer,
communicating to said third computer from said second computer of said content user, a request for payment of a charge to said content provider when said content user wishes to use said content data, and
using said third computer, in response to said request for payment, to mediate said payment of the charge from said content user to said content provider, based on the registered personal management data and the registered content management data; wherein
said request for payment includes said hash key data, and said step of using said third computer to mediate payment of the charge from said content provider to said content user using said content management data, includes
searching for the content provider using the hash key data included with said registered content management data and the hash key data received with the request for payment.

Embodiments of the present invention relate to a communication method, computer, and program used when providing content data on the Internet or another network and more particularly embodiments relate to a communication method, computer, and program for assisting payment of a charge by a user of the content to a provider.

The mode of operation of the communication method of the first aspect of the invention becomes as follows.

First, the third computer communicates with the first computer and the second computer to register the personal management data concerning the content provider and the content user, and the content management data concerning the content data.

Then, the content data is transmitted from the first computer to the second computer.

Then, the content user operates the second computer when he or she wants to pay the charge to the content provider and transmits the request for payment of the charge from the content user to the content provider for the reception of the content data to the third computer.

Then, the third computer performs a task for payment of the charge to the content provider, based on the personal management data and the content management data in response to the request for payment.

In this way, in the communication method of the first aspect of the invention, even in a case where the content data is transmitted by the peer-to-peer system between the first computer and the second computer, payment of a charge from the content user to the content provider is enabled.

The communication method of the first aspect of the invention preferably further manages by the third computer the total amount of the charge paid with respect to each content data by using the content management data.

The communication method of the first aspect of the invention registers by the third computer further verification data indicating the legitimacy of the content data provided by the content provider, receives by the third computer a request inquiring about the legitimacy of the content data from the second computer, and verifies by the third computer the legitimacy of the content data by using the verification data in response to the inquiry request and transmit the result of the related verification to the second computer.

The communication method of the first aspect of the invention registers by the third computer hash key data of the content data generated based on a predetermined hash function as the verification data, receives by the third computer the inquiry request including the hash key data of the content data from the second computer, and compares by the third computer the registered hash key data with the hash key data included in the inquiry request and verify the legitimacy of the content data.

Alternatively, the communication method of the first invention preferably receives by the third computer the content data from the first computer and generates and registers by the third computer the hash key data of the received content data based on the hash function.

Alternatively, the communication method of the first invention preferably receives by the third computer the hash key data of the content data generated by the first computer based on the hash function from the first computer and register the same.

According to a second aspect of the invention, there is provided a computer arranged to communicate with a first computer of a content provider and a second computer of a content user, to facilitate communication of content data from said first computer of said content provider to said second computer of said content user in accordance with peer-to-peer communication, the computer comprising
a storage means operable
to store personal management data concerning said content user, said personal management data concerning said content user being communicated from said second computer to said third computer,
to store personal management data concerning said content provider, said personal management data concerning said content provider being communicated from said first computer to said third computer and
to store content management data concerning said content data, said content management data being communicated from said first computer to said third computer the content management data including hash key data of said content data generated using a predetermined hash function as verification data indicating the legitimacy of the content data provided by said content provider,
an interface for receiving from said second computer of said content user an inquiry request, which includes hash key data of said content data, which content data has been received by said second computer from said first computer in accordance with said peer-to-peer communication, the hash key data having been generated by said second computer in accordance with said predetermined hash function, and
controlling means operable
to verify the legitimacy of said content data by comparing said registered hash key data stored in said storage means with said hash key data received with said inquiry request,
to transmit in combination with said interface the result of the related verification to said second computer, and in response to receipt of a request for payment of a charge to said content provider when said content user wishes to use said content data received by said interface from said second computer,
to mediate said payment of the charge from said content user to said content provider, based on the personal management data and the content management data stored in said storage means; wherein
said request for payment includes the hash key data and said controlling means is operable
to search for the content provider using the hash key data stored in said storage means with said content management data and said hash key data received with said request for payment.

The mode of operation of the computer of the second aspect of the invention may become as follows.

The personal management data for managing the content provider and the content user and the content management data for managing the content data are stored in advance in the storage means by registration processing.

Then, the interface receives a request for payment of the charge from the content user to the content provider for the reception of the content data from the second computer.

Then, the controlling means performs processing for paying the charge from the content user to the content provider based on the personal management data and the content management data in response to the request for payment.

According to another embodiment of the invention, a program to be executed in a computer makes said computer communicate with a first computer of a content provider and a second computer of a content user according to claim 10.

### BRIEF DESCRIPTION OF THE DRAWINGS

The invention will now be described by way of example with reference to the accompanying drawings, throughout which like parts are referred to by like references, and in which:
FIG. 1 is a view of the overall configuration of a communication system of an embodiment of the present invention;
FIG. 2 is a functional block diagram of a computer shown in FIG. 1;
FIG. 3 is a view for explaining user personal data stored in a user database shown in FIG. 2;
FIG. 4 is a view for explaining content management data stored in a content database shown in FIG. 2;
FIG. 5 is a view for explaining transaction management data stored in a transaction database shown in FIG. 2;
FIG. 6 is a flowchart for explaining an example of operation of a case where a content provider registers himself or herself in a computer;
FIG. 7 is a flowchart for explaining an example of operation of a communication system where a content user registers himself or herself in a computer;
FIG. 8 is a flowchart for explaining an example of operation of a communication system where a content provider registers content data in a computer;
FIG. 9 is a flowchart for explaining an example of an operation of a case where one computer downloads a file data from another computer by a peer-to-peer system and inquires about legitimacy of the related file data to still another computer; and
FIG. 10 is a flowchart for explaining an example of operation of a case where a content user receiving a download of file data from the content provider pays a charge to the content provider.

### DESCRIPTION OF THE PREFERRED EMBODIMENTS

First, an explanation will be given of a communication system according to an embodiment of the present invention.

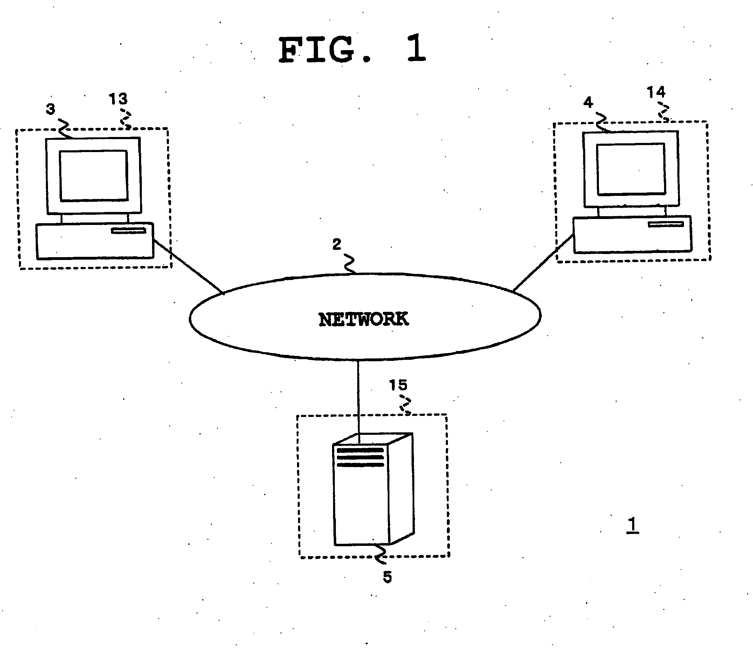

FIG. 1 is a view of the overall configuration of a communication system 1 of the present embodiment.

As shown in FIG. 1, the communication system 1 has, for example, a computer 3 used by a content provider 13, a computer 4 used by a content user 14, and a computer 5 used by a mediator 15. These are connected via a network 2 such as the Internet.

Here, the computer 3 corresponds to the first computer of the present invention, while the computer 4 corresponds to the second computer of the present invention.

Further, the computer 5 corresponds to the third computer of the first invention and corresponds to the computer of the second and third aspects of the inventions.

Further, the content provider 13 corresponds to the content provider of the present invention, while the content user 14 corresponds to the content user of the present invention.

First, an explanation will be given of an outline of the processing of the communication system 1 shown in FIG. 1.

In the communication system 1, the content provider 13 operates the computer 3 to freely transmit file data storing content data via the network 2 to other users (content users) by the peer-to-peer system.

In the communication system 1, further, the content provider 13 operates the computer 3 to register his or her personal information and hash key data determined from the file data storing the content data to be provided via the network 2 in the computer 5.

Next, the content provider 13 operates the computer 3 to open to the public the registered file data on the network 2.

The content user 14 operates the computer 4 to search for the file data opened to the public on the computer 3 by a search service provided by the mediator 15 by using the computer 5 or by another means.

Then, the content user 14 operates the computer 4 to download and use the file data opened to the public on the computer 3 into the computer 4 via the network 2 by the peer-to-peer system.

The content user 14 operates the computer 4 in order to inquire about the legitimacy of the related downloaded file data (for example, the legitimacy of the preparation side of the related file data or if a computer virus or socially unsuitable content is included in the related file data) to the computer 5, generates the hash key data of the downloaded file data, and transmits an inquiry request including the related hash key data to the computer 5.

The computer 5 compares the hash key data included in the related inquiry request and the registered hash key data for the related content data in response to the inquiry request, verifies the legitimacy of the related content data, and transmits the result of the verification to the computer 4.

At this time, the computer 5 may provide, other than the result of the verification, information concerning the provider, content information, that is a summary of the content, a field to which the content belongs (for example, text, music, still images, video, programs), the rough category (for example, in the case of text, a novel, poem, or essay; in the case of music, rock, folk, or jazz; in the case of a still image, a photograph or painting; in the case of video, a real picture or animation; and in the case of a program, the application of the program), and information such as a further smaller classification to the computer 4. It is assumed that the above information is registered in the computer 5 in advance.

Further, when the content user 14 wish to pay a charge (make a contribution) to the related provider for the reception of the provision of the related content data, he or she operates the computer 4 to transmit a request for payment of the charge including the user ID of the related user, the hash key data of the related content data, charge amount data indicating the amount of the charge, etc. to the computer 5.

The computer 5 searches for the provider of the content from the already registered information based on the hash key data included in the related request for payment of charge, and mediates the charge payment. Namely, the mediator 15 mediates the transfer of money between the user and the provider while interposed therebetween.

In the present embodiment, the computer 5 of the mediator 15 has the role of smoothly mediating the payment of the charge (contribution) from the content user 14 to the content provider 13.

Further, the computer 5 can provide information concerning the content data provided by the content provider 13, including if it is registered, to the content user 14, can provide a table of the registered content data to the content user 14 in an easily useable format, and can provide information indicating how much of a charge is to be paid with respect to which content data to the content provider 13 and the content user 14.

Further, the computer 5 performs processing for introducing content data matching the preferences of the related content user 14 to the content user 14 based on the type, genre, etc. of the content data which the content user 14 paid charges for in the past.

Further, the mediator 15 may also make the computer 5 perform processing for charging the content provider 13 or the content user 14 for the above service by the computer 5.

Further, the mediator 15 may also make the computer 5 perform a processing for collecting an advertisement insertion fee from an advertiser by inserting some sort of advertisement together with the service when providing the same.

Next, an explanation will be given of the components shown in FIG. 1.

### [Computer 3]

The computer 3 is used by the content provider 13 as mentioned above.

The computer 3 is connected to the network 2 and transmits personal data USER_INF concerning the content provider 13 to the computer 5 for it to register.

Further, the computer 3 opens to the public file data storing the content data on the network 2 by the peer-to-peer system for the content data relating to the content provider 13.

Further, the computer 3 generates hash key data from the file data of the content data to be provided by using the predetermined hash function and transmits the related hash key data and the related file data to the computer 5.

### [Computer 4]

The computer 4 is used by the content user 14 as mentioned above.

The computer 4 is connected to the network 2, and downloads the file data of the content data from the computer 3 by the peer-to-peer system via the network 2.

Further, when the content user 14 wishes to pay a charge for the downloaded file data, the computer 4 first generates the hash key data of the related file data by using the hash function.

Then, the computer 4 transmits a request for payment of charge including the user ID of the content user 14, the generated hash key data, and the charge amount data to the computer 5.

### [Computer 5]

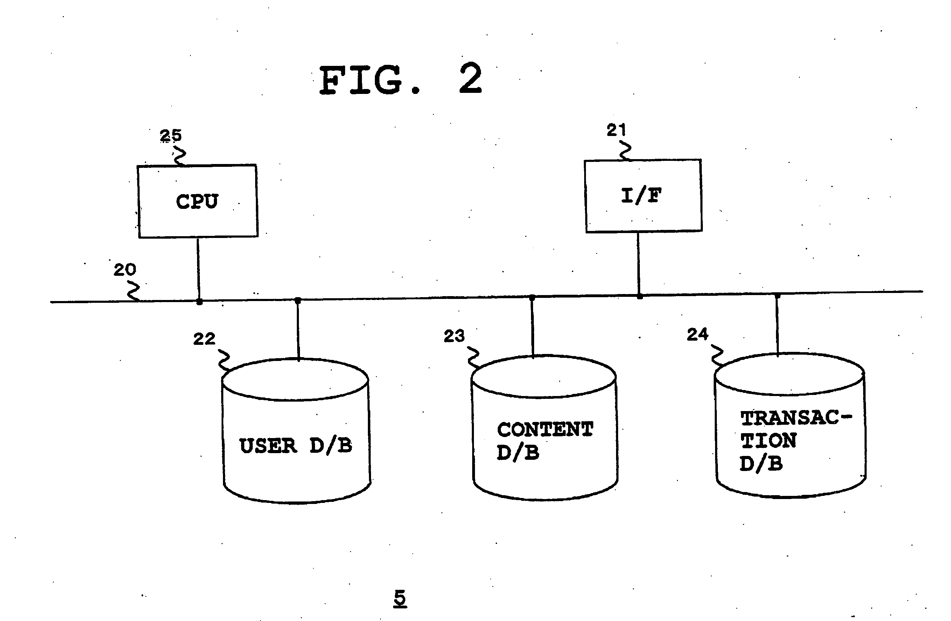

FIG. 2 is a functional block diagram of the computer 5 shown in FIG. 1.

As shown in FIG. 2, the computer 5 has, for example an interface (I/F) 21, a user database (D/B) 22, a content database 23, a transaction database 24 and a CPU 25. These are connected via an internal bus 20.

Here, the I/F 21 corresponds to the interface of the present invention; the user database 22, content database 23, and the transaction database 24 correspond to the storage means of the present invention; and the CPU 25 corresponds to the controlling means of the present invention.

The interface 21 is connected to the network 2 shown in FIG. 1.

The user database 22 stores the user personal data of the content provider 13 and the content user 14 in a searchable format.

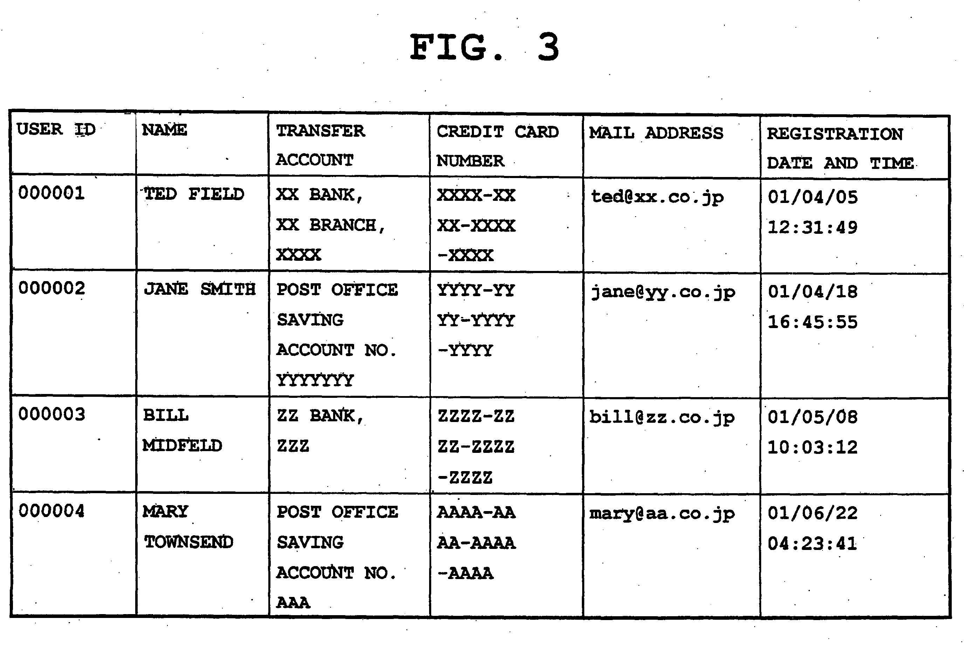

FIG. 3 is a view for explaining the user personal data stored in the user database 22.

As shown in FIG. 3, the user personal data indicates, for each user, for example the user ID, name, transfer account, credit card number, mail address, registration date, and so on linked together.

The "user ID" is an identifier such as numbers, symbols, etc. assigned so as to be able to identify an individual user such as the provider and user of the content.

The "name" is the name of the related user.

The "transfer account" is the account for the transfer of the related user necessary for the transfer of money by the related user via the mediator 15 or information in place of this.

The "credit card number" is the credit card number of the related user for the mediator 15 to debit or information in place of this.

The "mail address" is an electronic mail address of the related user.

The "registration date" is the date of registration of the related user in the mediator 15.

The content database 23 stores the content management data for managing the file data of the content registered by the content provider 13 in the mediator 15 in a searchable format.

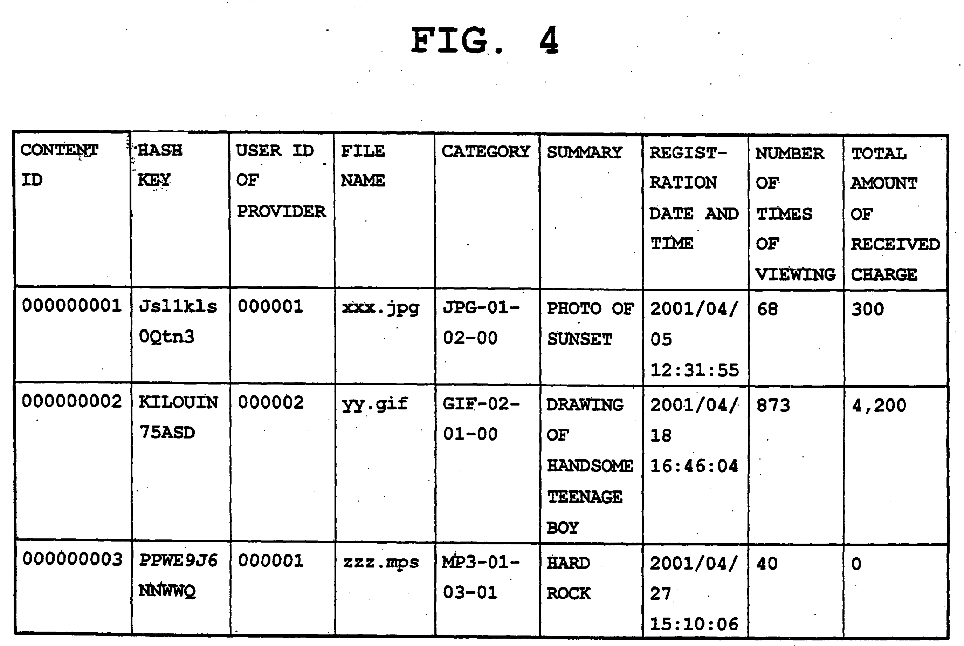

FIG. 4 is a view for explaining the content management data stored in the content database 23 shown in FIG. 2.

As shown in FIG. 4, the content management data indicates the content ID, hash key data, user ID of the provider, file name, classification, summary, registration date, number of times of viewing, and total amount of the received charge for the file data of each content registered in the mediator 15 by the content provider 13.

The "content ID" is an identifier such as numbers and symbols assigned so as to be able to identify the content data of the related file data.

The "hash key data" is data generated from the related file data by using the predetermined hash function. The hash key data becomes different even by slightly altering the file data and has the nature that it is usually very difficult to prepare other file data having the same hash key data as the hash key data generated from certain file data.

The "user ID of the provider" is the user ID of the content provider 13 providing the related file data.

The "file name" is the name of the related file data.

The "classification" is an identifier such as the field to which the related content data belongs or numbers and symbols expressing the classification.

The "summary" is a short text describing in brief the related content data, a simple explanation, etc.

The "registration date" is the date when the related file data was registered.

The transaction database 24 stores the transaction management data for managing a transaction performed by using the computer 5 in a searchable format.

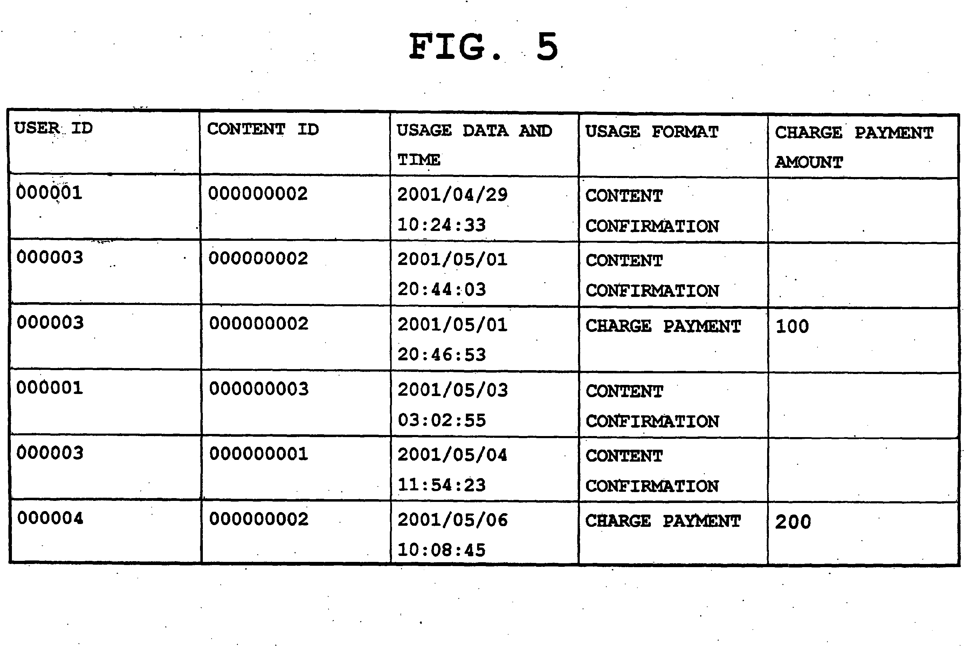

FIG. 5 is a view for explaining the transaction management data stored in the transaction database 24.

As shown in FIG. 5, the content usage situation management data indicates the user ID, content ID, usage date, usage format, and charge payment amount linked for every transaction.

The "user ID" is the user ID of the content user 14 performing the related transaction.

Further, the "content ID" is data for identifying the content data covered by the related transaction.

The "usage date" indicates the date when the usage concerning the related content was performed by the related transaction.

The "usage format" indicates the format of the usage of the file data by the related transaction. The "usage format" includes, for example, confirmation of content of the content data and payment of the charge.

The "charge payment amount" indicates the amount of the charge paid from the content user 14 to the content provider 13 for the download when the file data was downloaded to the content user 14 by the related transaction.

The CPU 25 operates based on a predetermined program (program of the present invention) and comprehensively manages the operation of the computer 5. The processing of the CPU 25 will be explained in detail in relation to the example of the operation mentioned later.

The computer 5 is connected to the network 2 and registers the personal data of the provider received from the computer 3 and the personal data of the user received from the computer 4 and holds the same as the user management data shown in FIG. 3.

Further, the computer 5 verifies the legitimacy (for example, that a virus is not included) of the file data received from the computer 3 and confirms the identity of the provider, then registers the related hash key data as the content management data for indicating the content ID, the user ID of the content provider 13, and the file name in FIG. 4 linked together.

Further, the computer 5 analyzes the content of the file data received from the computer 3 and automatically classifies the same and, at the same time, prepares summary data thereof and registers them as the content management data shown in FIG. 4.

Further, as shown in FIG. 4, the content management data shows, for each content, the number of times of viewing of the related content and the total value of the charge paid from the content user 14 for the usage of the file data of the related content (total amount of the received charge) linked together.

Further, the computer 5 searches for, for example, the content data having content matching with the an information provision request from the computer 4 of the content user 14 based on the classification and summary of the content management data in response to the related information provision request and transmits the search result to the computer 4.

Further, the computer 5 generates the transaction management data shown in FIG. 5 based on the transaction received from the content user 14 for the registered content and registers this in the transaction database 24.

Further, the computer 5 updates and deletes the data of the user database 22, the content database 23, and the transaction database 24 in response to a request or the like from the transaction, the computer 3, and the computer 4.

Below, an explanation will be given of examples of operation of the communication system 1 shown in FIG. 1.

### [First Example of Operation]

In this example of operation, an explanation will be given of an example of operation of the case where the content provider 13 registers himself or herself in the computer 5.

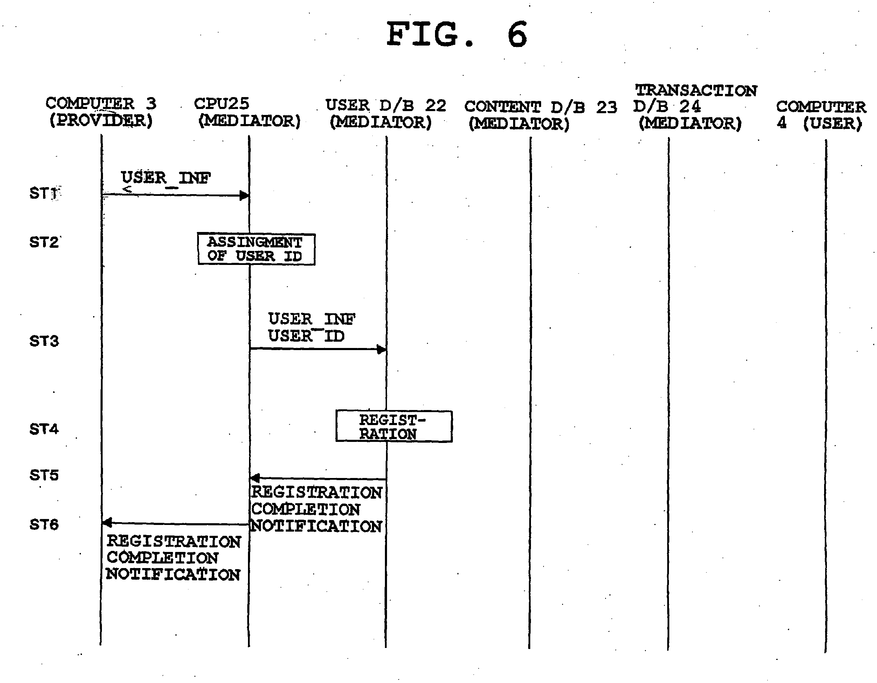

FIG. 6 is a flowchart for explaining the related example of operation.

### Step ST1:

In response to the operation of the computer 3 by the content provider 13, the computer 3 transmits a user registration request including personal data USER_INF such as the name of the computer 3, transfer account, credit card number, and mail address to the computer 5.

The related user registration request is received at the interface 21 of the computer 5 shown in FIG. 4.

### Step ST2:

The CPU 25 of the computer 5 shown in FIG. 4 assigns a user ID to the related user in response to the user registration request received at step ST1.

### Steps ST3 and ST4:

The CPU 25 registers the personal data USER_INF input at step ST1 and the user ID assigned at step ST2 in the user database 22 as the user management data shown in FIG. 3.

### Step ST5:

The user database 22 outputs a registration completion notification to the CPU 25.

### Step ST6:

The CPU 25 transmits the registration completion notification to the computer 3 via the interface 21.

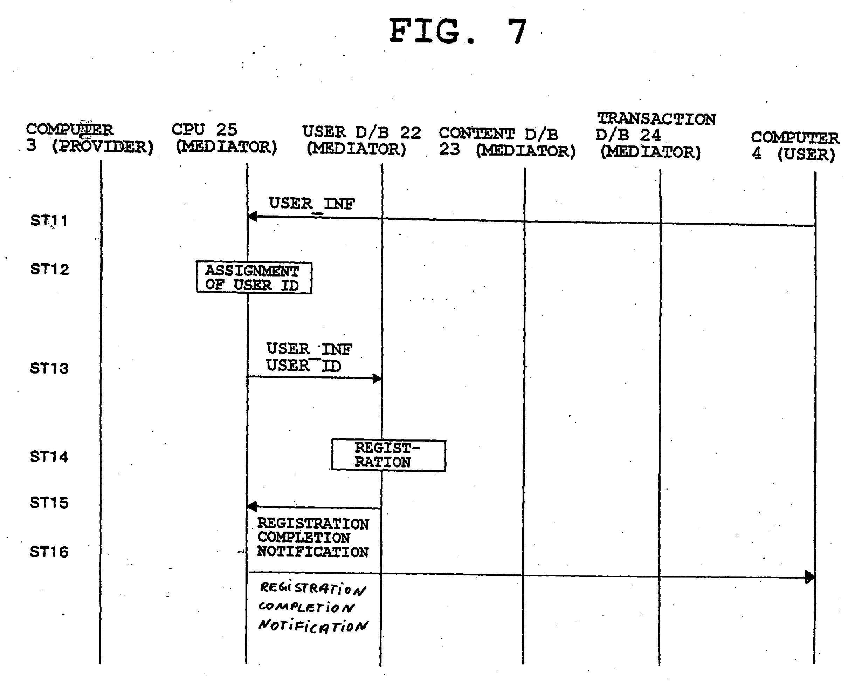

Further, an example of operation of the case where the content user 14 registers himself or herself in the computer 5 is shown in FIG. 7 and is basically the same as the case shown in FIG. 6 except for the point that the content user 14 performs the registration by using the computer 4.

### [Second Example of Operation]

In the related example of operation, an explanation will be given of the case where the content provider 13 registers the content data in the computer 5.

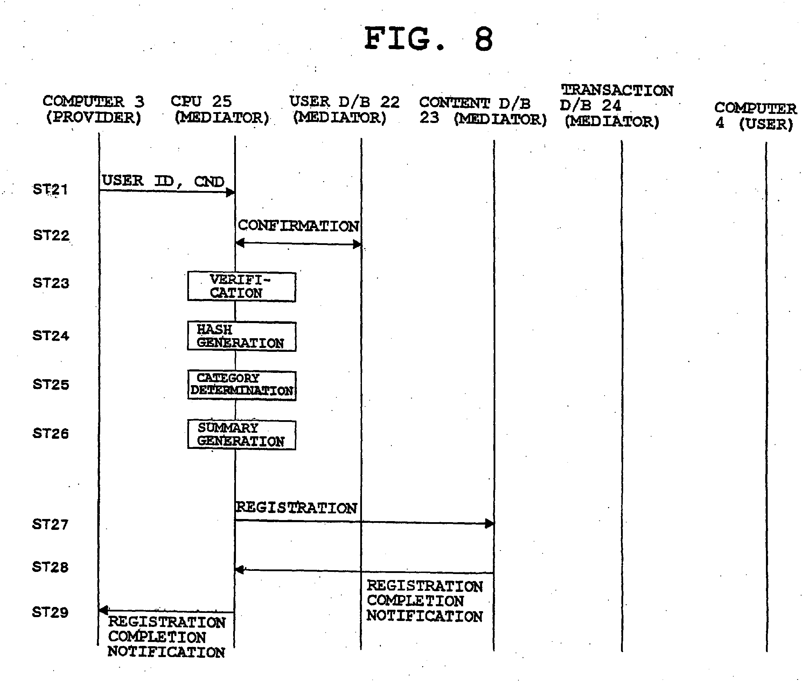

FIG. 8 is a flowchart for explaining the related example of operation.

### Step ST21:

The content provider 13 operates the computer 3 to transmit a content registration request including the file data CND storing the user ID and the content data to the computer 5.

At this time, the file name is accompanied by the file data CND.

Further, the content provider 13 may transmit a content registration request including the name and transfer account to the computer 5 in place of the user ID.

Further, the computer 3 may also generate the hash key data of the file data CND by using a predetermined hash function and transmit the related hash key data together with the file data CND to the computer 5.

For example, in a case where Jane Smith registers an image of a drawing of a handsome teenage boy as new content, at least "Jane Smith" as the name, "Post Office Savings Account No. YYYYYYY" as the transfer account, and a file data "ppp.gif" holding the image are transmitted.

Further, Jane Smith has already been registered in the user database 22. Therefore, it is also possible not to transmit the name and the transfer account, but transmit "000002" as the user ID thereof. Further, it is also possible to generate the hash key data "KILOUIN75ASD" from "yy.gif" and transmit this together from the computer 3 to the computer 5.

### Step ST22:

The CPU 25 shown in FIG. 4 searches through the user database 22 using the user ID received at step ST21 as the key and confirmsa whether or not the related user ID has been already registered.

Then, where the CPU 25 judges that the related user ID has been already registered, the processing routine proceeds to step ST23. In other cases, user registration is carried out according to the routine explained by using FIG. 6.

Further, when the content registration request including the name, transfer account, etc. of the content provider 13 is received at step ST21 in place of the user ID, the corresponding user ID is searched for from the user database 22 based on the related name, transfer account, etc. Where it is not found, user registration is carried out according to the routine explained by using FIG. 6.

### Step ST23:

The CPU 25 verifies for example that a computer virus or socially unsuitable content is not included in the file data received at step ST21.

When the result of the verification is that a computer virus and socially unsuitable content are not included in the file data, the CPU 25 proceeds to the processing of step ST24.

On the other hand, when the result of the verification is that a computer virus or socially unsuitable content is included in the file data, the CPU 25 rejects the content registration and notifies this to the computer 3 of the content provider 13.

### Step ST24:

The CPU 25 generates the hash key data of the file data received at step ST21 by using the hash function.

Note that, when the hash key data is included in the content registration request, the related hash key data and the generated hash key data are compared, and the legitimacy of the file data transmitted by the content provider is confirmed. If it is clarified that the file data is not legitimate, the following processing of the content registration is suspended, and suitable exceptional processing for requesting the re-transmission of the file data and the hash key data to the computer 3 or the like is performed.

Note that the hash key data can be generated at any timing after step ST21 up to step ST27.

The CPU 25 generates for example the hash key data "KILOUIN75ASD" from the file data of the content ID "000000002" shown in FIG. 5

### Step ST25:

The CPU 25 determines the classification based on the attribute of the content data stored in the related file data.

For example, the CPU 25 determines the category such as "GIF file", "still image", or "person".

Note that, it is also possible for the content provider 13 to determine the related category and transmit the content registration request including the related category from the computer 3 to the computer 5.

The related category is used in for example a case where content information matching the content user 14 is provided to the computer 4 in response to a search request from the computer 4.

### Step ST26:

The CPU 25 generates summary data matching the content of the content data stored in the related file data. The CPU 25 generates for example summary data such as "drawing of handsome teenage boy" as the summary of the content.

Note that it is also possible if the content provider 13 generates the related summary data and transmits the content registration request including the related summary data from the computer 3 to the computer 5.

The related summary data is used in for example a case where a summary of the content information matching the content user 14 is provided to the computer 4 in response to a search request from the computer 4.

### Step ST27:

The CPU 25 registers the user ID received at step ST21 and the hash key data, category, summary, and registration date generated at steps ST24, ST25, and ST26 in the content database 23 as the content registration data shown in FIG. 4.

For example, "000000002" is assigned as the content ID, and the hash key data "KILOUIN75ASD" generated from the file data, provider ID "000002", file name "yy.gif", category "GIF-02-01-00", and the summary "drawing of handsome teenage boy" generated from the file data are registered as the content management data in the content database 23.

### Step ST28:

The content database 23 outputs the registration completion notification to the CPU 25.

### Step ST29:

The content database 23 transmits the registration completion notification via the interface 21 to the computer 3.

Thereafter, the content provider 13 opens to the public the related file data on the computer 3 and transmits the related file data to for example the computer 4 by the peer-to-peer system.

### [Third Example of Operation]

In the related example of operation, an explanation will be given of a case where the computer 4 downloads the file data from the computer 3 by the peer-to-peer system and inquires about the legitimacy of the related file data to the computer 5.

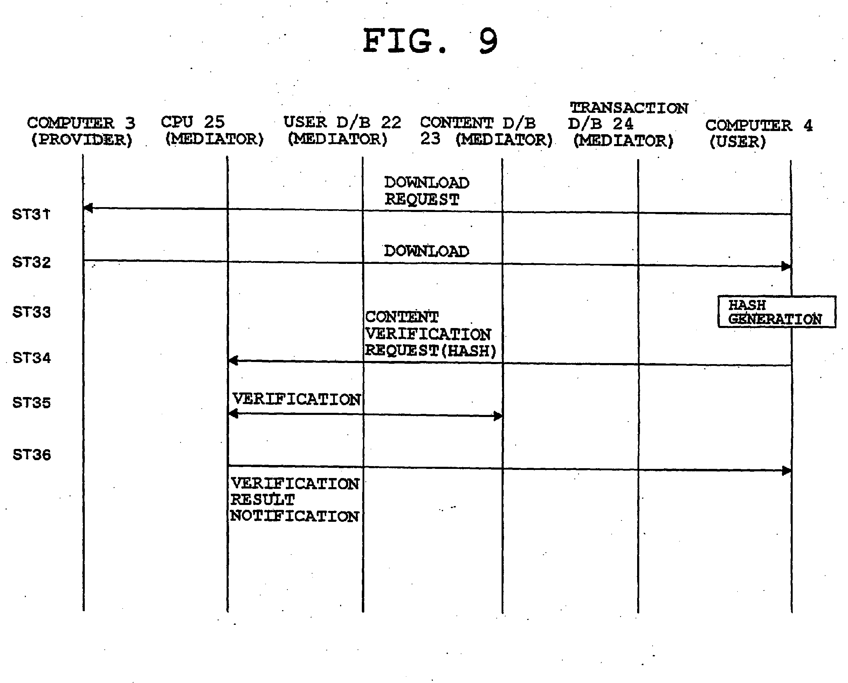

FIG. 9 is a flowchart for explaining the related example of operation.

### Step ST31:

The computer 4 transmits a download request designating the file data to the computer 3.

### Step ST32:

The computer 3 downloads (transmits) the file data to the computer 4 by the peer-to-peer system in response to the download request received at step ST31.

At this stage, the content user 14 cannot determine whether the file data downloaded to the computer 4 is one by a legitimate provider or it includes a computer virus.

### Step ST33:

The computer 4 generates the hash key data of the file data downloaded at step ST32 by using the hash function.

### Step ST34:

The computer 4 transmits the content verification request including the hash key data generated at step ST33 to the computer 5.

The related content verification request is received at the interface 21 of the computer 5 shown in FIG. 2.

### Step ST35:

The CPU 25 of the computer 5 shown in FIG. 2 verifies whether or not the file data corresponding to the hash key data included in the content verification request received at step ST34 exists, that is, the legitimacy of the file data downloaded by the computer 4, by referring to the content database 23.

### Step ST36:

The CPU 25 transmits the result of the verification to the computer 4 via the interface 21.

At this time, it is also possible if the CPU 25 reads out the information concerning the attributes of the related file data and the information concerning the content provider 13 from the content database 23 and transmits the information together with the result of the verification to the computer 4.

### [Fourth Example of Operation]

In this example of operation, an explanation will be given of the case where the content user 14 receiving the download of the file data from the content provider 13 pays a charge to the content provider 13.

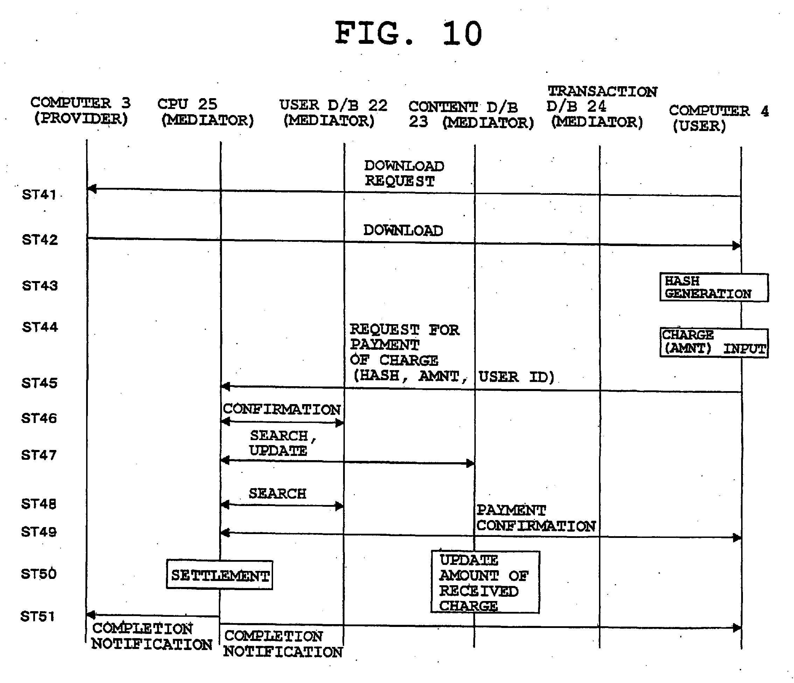

FIG. 10 is a flowchart for explaining this example of operation.

### Step ST41:

The computer 4 transmits the download request designating the file data to the computer 3.

### Step ST42:

The computer 3 downloads (transmits) the file data to the computer 4 by the peer-to-peer system in response to the download request received at step ST41.

### Step ST43:

The computer 4 generates the hash key data of the file data downloaded at step ST42 by using the hash function.

### Step ST44:

The content user 14 inputs the amount AMNT of the charge (contribution) to be paid to the content provider 13 to the computer 4.

### Step ST45:

The computer 4 transmits the request for payment of charge including the hash key data generated at step ST43, the charge amount data AMNT indicating the amount of the charge input at step ST44, and the user ID of the content user 14 to the computer 5.

The request for payment of charge is received at the I/F 21 of the computer 5 shown in FIG. 2.

Note that, it is also possible to include the name and credit card number of the content user 14 in the request for payment of charge in place of the user ID.

Further, preferably the mail address of the content user 14 is included in the request for payment of charge.

Further, it is also possible if selection data of whether or not the charge is to be anonymously paid is included.

For example, where John Brown wishes to contribute 300 yen for usage of the file "xxx.jpg", the request for payment of charge including at least "John Brown" as the name, the credit card number "ZZZZ-ZZZZ-ZZZZ-ZZZZ", the hash key data "Js11k1s0Qtn3" generated from xxx.jpg, and the "300 yen" to be contributed is transmitted from the computer 4 to the computer 5.

Note that, "John Brown" has been already registered in the service user database, therefore, the name and the credit card number are not transmitted, but the request for payment of charge including the user ID "000003" is transmitted from the computer 4 to the computer 5.

### Step ST46:

The CPU 25 of the computer 5 shown in FIG. 2 searches through for example the user database 22 by using the user ID of the content user 14 included in the request for payment of charge as a key in response to the request for payment of charge received at step ST45 and confirms if the content user 14 has been already registered.

Then, when the content user 14 has been already registered, the CPU 25 obtains the credit card number of the content user 14 from the user database 22.

Further, the CPU 25 acquires personal data such as the mail address of the content user 14 from the user database 22 when anonymous charge payment is not designated.

Note that, when the content user 14 is not registered in the user database 22, the CPU 25 performs the registration processing according to the routine shown in FIG. 6.

Further, where personal data updated or added for the content user 14 is included in the request for payment of charge, the database 22 is added to or updated by using the related personal data.

### Step ST47:

The CPU 25 verifies if the file data concerned is registered by searching through the content database 23 based on the hash key data included in the request for payment of charge.

Further, the CPU 25 acquires the user ID of the content provider 13 of the related file data and, if necessary, the file name, from the content database 23.

The CPU 25 acquires for example the user ID "000001" of the provider and file name "xxx.jpg" from the hash key data "Js11k1s0Qtn3" by the content ID "000000001".

When judging that the file data concerned is not registered in the content database 23, the CPU 25 notifies this to the computer 4 and suspends the following processing.

### Step ST48:

The CPU 25 searches through the user database 22 by using the user ID of the content provider 13 acquired at step ST47 as a key and acquires the name and the transfer account of the content provider 13 as the search result.

The CPU 25 acquires for example the name "Ted Field" and transfer account "XX bank, XX branch, XXXX" from the user database 22 by using the user ID "000001" as a key.

### Step ST49:

The CPU 25 makes the computer 4 display a payment confirmation screen including information useful for the final decision of the charge payment, for example, the fact that charge payment mediation is possible, the name of the content provider 13, and the charge amount.

Then, when receiving as input an instruction for payment from the computer 4, the CPU 25 proceeds to the processing of at step ST49, while suspends the processing in other cases.

By this, erroneous procedures by the content user 14 can be avoided.

### Step ST50:

The CPU 25 performs settlement processing of the amount indicated by the charge data included in the request for payment of charge based on the credit card number of the content user 14 acquired at step ST46 and the transfer account of the content provider 13 acquired at step ST47.

For example, the CPU 25 performs the settlement processing such as debiting 300 yen from the credit card "ZZZZ-ZZZZ-ZZZZ-ZZZZ" of Bill Midfeld as the content user 14 and transferring 300 yen to the transfer account "XX bank, XX branch XXXXXX" of Ted Field.

When some sort of problem arises in the settlement processing, the CPU 25 performs exceptional processing, for example, the cancellation of hte debiting and transfer of the charge, and notifies this to the computer 4.

### Step ST51:

The CPU 25 transmits the notification indicating the completion of the charge payment mediation to the computer 3 and the computer 4.

In the notification, for example, where Bill Midfeld wishes to anonymously pay the charge to Ted Field, the information of name etc. of Bill Midfeld is not notified to the computer 3, but notified as for example "a contribution of 300 yen was made for xxx.jpg". To the computer 4, for example, is notified that "a contribution of 300 yen was made for xxx.jpg provided by Ted Field".

This notification need not be performed.

As explained above, according to the communication system 1, even in the case where the field data is transmitted and received by the peer-to-peer system between the computer 3 and the computer 4, it becomes possible to pay the charge by the contribution or the like from the content user 14 to the content provider 13. Due to this, the useful content is opened to the public on the network 2 and usage can be promoted.

Further, according to the communication system 1, the content user 14 can receive information concerning the legitimacy of the received file data from the computer 5 and can safely use the received file data.

The present invention is not limited to the above embodiments.

For example, it is also possible if communication with the computers 3, 4, and 5 is realized by using e-mail, functions on a Web browser, etc.

Further, the request and the transmission and reception of the data among the computers 3, 4, and 5 can be carried out after encryption.

Further, in the example shown in FIG. 1, the case of using one computer 3 and computer 4 each was exemplified, but a plurality of the computers 3 and computers 4 may also be used.

Further, in the above embodiments, there are also cases where the content provider 13 becomes the content user 14 and cases where the content user 14 becomes the content provider 13.

In this case, each of the computer 3 and computer 4 has functions of both of the computer 3 and the computer 4 mentioned above.

Further, it is also possible if at least two of the computers 3, 4, and 5 shown in FIG. 1 are realized on the same computer.

Further, in the example shown in FIG. 1 and FIG. 2, the case where the user database 22, content database 23, and transaction database 24 shown in FIG. 2 were placed in the computer 5 was exemplified, but it is also possible if at least one of them is placed in an apparatus different from the computer 5 or in another computer on the network 2.

Further, it is also possible if at least one of the user database 22, content database 23, and transaction database 24 shown in FIG. 2 is configured as the same database.

Further, it is also possible if the content database 23 is configured as a plurality of databases different from each other for every category of the content.

Further, it is also possible if the file data transmitted by the computer 3 is stored in the computer 5.

As explained above, according to the present invention, a communication method, computer, and program enabling suitable payment of a charge to a content data provider even when the content data is provided by the peer-to-peer system can be provided.

While the invention has been described with reference to specific embodiments chosen for purpose of illustration, it should be apparent that numerous modifications could be made thereto by those skilled in the art without departing from the basic concept and scope of the invention.

Various respective aspects and features of the invention are defined in the appended claims. Features from the dependent claims may be combined with features of the independent claims as appropriate and not merely as explicitly set out in the claims.

## Claims

1. A method for communicating content data from a first computer (3) of a content provider (13) to a second computer (4) of a content user (14) in accordance with a peer-to-peer communication, the method comprising
registering personal management data concerning said content user (14) with a third computer (5), said personal management data concerning said content user being communicated from said second computer (4) to said third computer (5),
registering personal management data concerning said content provider (13) and content management data concerning said content data with said third computer (5), said personal management data concerning said content provider and said content management data being communicated from said first computer (3) to said third computer (5) the content management data including hash key data of said content data generated using a predetermined hash function as verification data indicating the legitimacy of the content data provided by said content provider, and
communicating said content data from said first computer (3) of said content provider (13) to said second computer (4) of said content user (14) in accordance with the peer-to-peer communication,
receiving from said second computer (4) of said content user (14) at said third computer (5) an inquiry request, which includes hash key data generated by said second computer (4) in accordance with said predetermined hash function,
verifying by said third computer (5) the legitimacy of said content data by using said registered hash key data in response to said inquiry request,
transmitting the result of the related verification to said second computer (4),
communicating to said third computer (5) from said second computer (4) of said content user (14), a request for payment of a charge to said content provider (13) when said content user (13) wishes to use said content data, and
using said third computer (5), in response to said request for payment, to mediate said payment of the charge from said content user (14) to said content provider (13), based on the registered personal management data and the registered content management data; wherein
said request for payment includes said hash key data, and said step of using said third computer (5) to mediate payment of the charge from said content provider (13) to said content user (14) using said content management data, includes
searching for the content provider (13) using the hash key data included with said registered content management data and the hash key data received with the request for payment.

2. A communication method as set forth in claim 1, further comprising the step of managing by said third computer (5) the total amount of the charge paid with respect to each content data by using said content management data.

3. A communication method as set forth in claim 1 wherein said registering said content management data at said third computer (5) comprises the steps of:
receiving by said third computer (5) said content data from said first computer (3), and
generating and registering by said third computer (5) said hash key data of said received content data based on said hash function.

4. A communication method as set forth in claim 1, further comprising the step of receiving by said third computer (5) said hash key data of said content data generated by said first computer (3) based on said hash function from said first computer (4) and registering the same.

5. A communication method as set forth in claim 1, further comprising the step of communicating by said third computer (5) with said first computer (3) and second computer (4) through a network.

6. A computer arranged to communicate with a first computer (3) of a content provider (13) and a second computer (4) of a content user (14), to facilitate communication of content data from said first computer (3) of said content provider (13) to said second computer (4) of said content user (14) in accordance with a peer-to-peer communication, the computer comprising
a storage means (22, 23, 24) operable
to store personal management data concerning said content user, said personal management data concerning said content user being communicated from said second computer (4) to said computer (5),
to store personal management data concerning said content provider, said personal management data concerning said content provider being communicated from said first computer (3) to said computer (5) and
to store content management data concerning said content data, said content management data being communicated from said first computer (3) to said computer (5) the content management data including hash key data of said content data generated using a predetermined hash function as verification data indicating the legitimacy of the content data provided by said content provider (13),
an interface (21) for receiving from said second computer (4) of said content user (14) an inquiry request, which includes hash key data of said content data, which content data has been received by said second computer (4) from said first computer (14) in accordance with said peer-to-peer communication, the hash key data having been generated by said second computer (4) in accordance with said predetermined hash function, and
controlling means (25) operable
to verify the legitimacy of said content data by comparing said registered hash key data stored in said storage means with said hash key data received with said inquiry request,
to transmit in combination with said interface (21) the result of the related verification to said second computer (4), and in response to receipt of a request for payment of a charge to said content provider (13) when said content user (14) wishes to use said content data received by said interface (21) from said second computer (4),
to mediate said payment of the charge from said content user (14) to said content provider (13), based on the personal management data and the content management data stored in said storage means (22, 23, 24); wherein
said request for payment includes the hash key data and said controlling means (25) is operable
to search for the content provider using the hash key data stored in said storage means (22, 23, 24) with said content management data and said hash key data received with said request for payment.

7. A computer as set forth in claim 6, wherein said controlling means (25) manages the total amount of the charge paid for each content data using said content management data.

8. A computer as set forth in claim 6, wherein said interface (21) receives said content data from said first computer (3) and
said controlling means (25) generates and registers said hash key data of said received content data based on said hash function and stores it in said storage means (23).

9. A computer as set forth in claim 8, wherein:
said interface receives said hash key data of said content data generated by said first computer (3) based on said hash function from said first computer (3) and
said controlling means (25) registers said received hash key data and stores it in same storage means (23).

10. A computer program which, when executed by a computer, makes said computer perform the following steps : communicating with a first computer (3) of a content provider (13) and a second computer (4) of a content user (14), to facilitate communication of content data from said first computer (3) of said content provider (13) to said second computer (4) of said content user (14) in accordance with a peer-to-peer communication, storing personal management data concerning said content user, said personal management data concerning said content user being communicated from said second computer (4) to said computer (5),
storing personal management data concerning said content provider, said personal management data concerning said content provider being communicated from said first computer (3) to said computer (5) and
storing content management data concerning said content data, said content management data being communicated from said first computer (3) to said computer (5) the content management data including hash key data of said content data generated using a predetermined hash function as verification data indicating the legitimacy of the content data provided by said content provider (13),
receiving from said second computer (4) of said content user (14) an inquiry request, which includes hash key data of said content data, which content data has been received by said second computer (4) from said first computer (14) in accordance with said peer-to-peer communication, the hash key data having been generated by said second computer (4) in accordance with said predetermined hash function, and
verifying the legitimacy of said content data by comparing said registered hash key data stored in said storage means with said hash key data received with said inquiry request,
transmitting the result of the related verification to said second computer (4), and in response to receipt of a request for payment of a charge to said content provider (13) when said content user (14) wishes to use said content data received by said interface (21) from said second computer (4),
mediating said payment of the charge from said content user (14) to said content provider (13), based on the personal management data and the content management data stored; wherein
said request for payment includes the hash key data and
searching for the content provider using the hash key data stored with said content management data and said hash key data received with said request for payment; or all the preceding steps and additionally the steps of the third computer of claims 2 to 5.

## Patentansprüche

1. Verfahren zur Übertragung von Inhaltdaten über eine Peer-to-Peer-Verbindung von einem ersten Rechner (3) eines Inhaltanbieters (13) zu einem zweiten Rechner (4) eines Inhaltnutzers (14), wobei das Verfahren aufweist:
die Registrierung von personenbezogenen Verwaltungsdaten über den Inhaltnutzer (14) in einem dritten Rechner (5), wobei diese den Inhaltsnutzer betreffenden personenbezogenen Verwaltungsdaten vom zweiten Rechner (4) zum dritten Rechner (5) übertragen werden,
die Registrierung von personenbezogenen Verwaltungsdaten über den Inhaltanbieter (13) und Inhaltverwaltungsdaten bezüglich der Inhaltsdaten im dritten Rechner (5), wobei die personenbezogenen Verwaltungsdaten über den Inhaltanbieter sowie die Inhaltverwaltungsdaten vom ersten Rechner (3) zum dritten Rechner (5) übertragen werden und diese Inhaltverwaltungsdaten Hash-Schlüsseldaten der Inhaltdaten enthalten, die mittels einer vorgegebenen Hash-Funktion als Verifizierungsdaten zur Angabe der Zulässigkeit der vom Inhaltanbieter bereitgestellten Inhaltdaten erzeugt worden sind, und
die Übertragung der Inhaltdaten über die Peer-to-Peer-Verbindung vom ersten Rechner (3) des Inhaltanbieters (13) zum zweiten Rechner (4) des Inhaltnutzers (14),
der Empfang am dritten Rechner (5) einer Auskunftsanforderung vom zweiten Rechner (4) des Inhaltnutzers (14), welche Hash-Schlüsseldaten enthält, die vom zweiten Rechner (4) gemäß der vorgegebenen Hash-Funktion erzeugt worden sind,
die Verifizierung der Zulässigkeit der Inhaltdaten durch den dritten Rechner (5) mittels der registrierten Hash-Schlüsseldaten anlässlich der Auskunftsanforderung,
die Übertragung des Ergebnisses der entsprechenden Verifizierung zum zweiten Rechner (4),
die Übertragung einer Anweisung zur Zahlung einer Gebühr an den Inhaltanbieter (13) vom zweiten Rechner (4) des Inhaltnutzers (14) verwendet wird, zum dritten Rechner (5), wenn der Inhaltnutzer (14) die Inhaltdaten verwenden will,
die Verwendung des dritten Rechners (5) anlässlich dieser Zahlungsanweisung zur Vermittlung der Zahlung der Gebühr vom Inhaltnutzer (14) an den Inhaltanbieter (13) auf Grundlage der registrierten personenbezogenen Verwaltungsdaten und der registrierten Inhaltverwaltungsdaten, wobei
die Zahlungsanweisung diese Hash-Schlüsseldaten enthält und der Schritt der Verwendung des dritten Rechners (5) zur Vermittlung der Zahlung der Gebühr vom Inhaltnutzer (14) an den Inhaltanbieter (13) auf der Grundlage der Inhaltverwaltungsdaten auch
die Suche nach dem Inhaltanbieter (13) mittels der in den Inhaltverwaltungsdaten enthaltenen Hash-Schlüsseldaten und mittels der mit der Zahlungsanweisung empfangenen Hash-Schlüsseldaten enthält.

2. Kommunikationsverfahren nach Anspruch 1, das weiterhin den Schritt der Verwaltung des Gesamtbetrags der für alle Inhaltdaten gezahlten Gebühren mittels der Inhaltverwaltungsdaten durch den dritten Rechner (5) enthält.

3. Kommunikationsverfahren nach Anspruch 1, worin die Registrierung der Inhaltverwaltungsdaten im dritten Rechner (5) folgende Schritte enthält:
Empfang der Inhaltdaten vom ersten Rechner (3) am dritten Rechner (5) und
Erzeugung und Registrierung der Hash-Schlüsseldaten der empfangenen Inhaltdaten durch den dritten Rechner (5) mittels der Hash-Funktion.

4. Kommunikationsverfahren nach Anspruch 1, das weiterhin den Schritt des Empfangs und der Registrierung der Hash-Schlüsseldaten der Inhaltdaten am dritten Rechner (5), die vom ersten Rechner (3) mittels der Hash-Funktion des ersten Rechners (3) erzeugt worden sind, aufweist.

5. Kommunikationsverfahren nach Anspruch 1, das weiterhin den Schritt der Kommunikation des dritten Rechners (5) mit dem ersten Rechner (3) und dem zweiten Rechner (4) über ein Netz aufweist.

6. Rechner, der so eingerichtet ist, dass er mit einem ersten Rechner (3) eines Inhaltanbieters (13) und einem zweiten Rechner (4) eines Inhaltnutzers (14) kommunizieren kann, um die Übertragung von Inhaltdaten vom ersten Rechner (3) des Inhaltsanbieters (13) zum zweiten Rechner (4) des Inhaltsnutzers (14) über eine Peer-to-Peer-Verbindung zu vereinfachen, wobei der Rechner enthält:
ein Speichermittel (22, 23, 24), das in der Lage ist,
personenbezogene Verwaltungsdaten über den Inhaltnutzer zu speichern, wobei diese den Inhaltsnutzer betreffenden personenbezogenen Verwaltungsdaten vom zweiten Rechner (4) zum Rechner (5) übertragen werden,
personenbezogene Verwaltungsdaten über den Inhaltanbieter zu speichern, wobei diese den Inhaltsanbieter betreffenden personenbezogenen Verwaltungsdaten vom ersten Rechner (3) zum Rechner (5) übertragen werden, und
Inhaltverwaltungsdaten bezüglich der Inhaltdaten zu speichern, wobei die Inhaltverwaltungsdaten vom ersten Rechner (3) zum Rechner (5) übertragen werden und die Inhaltverwaltungsdaten Hash-Schlüsseldaten der Inhaltdaten enthalten, die mit einer vorgegebenen Hash-Funktion als Verifizierungsdaten zur Angabe der Zulässigkeit der vom Inhaltanbieter bereitgestellten Inhaltdaten erzeugt worden sind,
eine Schnittstelle (21), die in der Lage ist,
eine Auskunftsanforderung vom zweiten Rechner (4) des Inhaltnutzers (14) zu empfangen, welche Hash-Schlüsseldaten derjenigen Inhaltdaten enthält, die der zweite Rechner (4) vom ersten Rechner (3) über die Peer-to-Peer-Verbindung empfangen hat, wobei die Hash-Schlüsseldaten vom zweiten Rechner (4) gemäß der vorgegebenen Hash-Funktion erzeugt worden sind,
ein Steuermittel (25), das in der Lage ist,
die Zulässigkeit der Inhaltdaten durch Vergleich der registrierten, im Speichermittel gespeicherten Hash-Schlüsseldaten mit den mit der Auskunftsanforderung empfangenen Hash-Schlüsseldaten zu verifizieren,
das Ergebnis der entsprechenden Verifizierung über die Schnittstelle (21) zum zweiten Rechner (4) zu übertragen sowie, wenn der Inhaltnutzer (14) die empfangenen Inhaltdaten verwenden will, nachdem vom zweiten Rechner (4) über die Schnittstelle (21) eine Anweisung zur Zahlung einer Gebühr an den Inhaltanbieter (13) empfangen worden ist,
die Zahlung der Gebühr vom Inhaltnutzer (14) an den Inhaltanbieter (13) zu vermitteln auf Grundlage der im Speichermittel (22, 23, 24) gespeicherten personenbezogenen Verwaltungsdaten und Inhaltverwaltungsdaten, wobei
die Zahlungsanweisung die Hash-Schlüsseldaten enthält und das Steuermittel in der Lage ist,
nach dem Inhaltanbieter mittels der im Speichermittel (22, 23, 24) zusammen mit den Inhaltverwaltungsdaten gespeicherten Hash-Schlüsseldaten und mittels der mit der Zahlungsanweisung empfangenen Hash-Schlüsseldaten zu suchen.

7. Rechner nach Anspruch 6, wobei das Steuermittel (25) mittels der Inhaltverwaltungsdaten den Gesamtbetrag der Gebühren verwaltet, der für alle Inhaltdaten gezahlt worden ist.

8. Rechner nach Anspruch 6, wobei die Schnittstelle (21) die Inhaltdaten vom ersten Rechner (3) empfängt und
das Steuermittel (25) die Hash-Schlüsseldaten der empfangenen Inhaltdaten mittels der Hash-Funktion erzeugt und registriert und sie im Speichermittel (23) speichert.

9. Rechner nach Anspruch 8, wobei
die Schnittstelle die vom ersten Rechner (3) mittels seiner Hash-Funktion erzeugten Hash-Schlüsseldaten der Inhaltdaten empfängt und
das Steuermittel (25) die empfangenen Hash-Schlüsseldaten registriert und im selben Speichermittel (23) speichert.

10. Rechnerprogramm, das bei seiner Ausführung auf einem Rechner folgende Schritte veranlasst:
Kommunikation mit einem ersten Rechner (3) eines Inhaltanbieters (13) und mit einem zweiten Rechner (4) eines Inhaltnutzers (14), um die Übertragung von Inhaltdaten vom ersten Rechner (3) des Inhaltsanbieters (13) zum zweiten Rechner (4) des Inhaltsnutzers (14) über eine Peer-to-Peer-Verbindung zu vereinfachen,
Speicherung von personenbezogenen Verwaltungsdaten über den Inhaltnutzer, wobei diese den Inhaltsnutzer betreffenden personenbezogenen Verwaltungsdaten vom zweiten Rechner (4) zum Rechner (5) übertragen werden,
Speicherung von personenbezogenen Verwaltungsdaten über den Inhaltanbieter, wobei diese den Inhaltsanbieter betreffenden personenbezogenen Verwaltungsdaten vom ersten Rechner (3) zum Rechner (5) übertragen werden,
Speicherung von Inhaltverwaltungsdaten bezüglich der Inhaltdaten, wobei diese Inhaltverwaltungsdaten vom ersten Rechner (3) zum Rechner (5) übertragen werden und Hash-Schlüsseldaten der Inhaltdaten enthalten, welche mittels einer vorgegebenen Hash-Funktion als Verifizierungsdaten zur Angabe der Zulässigkeit der vom Inhaltanbieter (13) bereitgestellten Inhaltdaten erzeugt worden sind,
Empfang einer Auskunftsanforderung vom zweiten Rechner (4) des Inhaltnutzers (14), welche Hash-Schlüsseldaten der Inhaltdaten enthält, die der zweite Rechner (4) vom ersten Rechner (3) über die Peer-to-Peer-Verbindung empfangen hat, wobei die Hash-Schlüsseldaten vom zweiten Rechner (4) mittels der vorgegebenen Hash-Funktion erzeugt worden sind, und
Verifizierung der Zulässigkeit der Inhaltdaten durch Vergleich der registrierten, im Speichermittel gespeicherten Hash-Schlüsseldaten mit den zusammen mit der Auskunftsanforderung empfangenen Hash-Schlüsseldaten,
Übertragung des Ergebnisses der entsprechenden Verifizierung zum zweiten Rechner (4), sowie, wenn der Inhaltnutzer die empfangenen Inhaltdaten verwenden will, nachdem vom zweiten Rechner (4) über die Schnittstelle (21) eine Anweisung zur Zahlung einer Gebühr an den Inhaltanbieter (13) empfangen worden ist,
Vermittlung der Zahlung der Gebühr vom Inhaltnutzer (14) an den Inhaltanbieter (13) auf der Grundlage der gespeicherten personenbezogenen Verwaltungsdaten und der Inhaltverwaltungsdaten, wobei
die Hash-Schlüsseldaten in der Zahlungsanweisung enthalten sind, und
der Inhaltanbieter mittels der mit den Inhaltverwaltungsdaten gespeicherten Hash-Schlüsseldaten und mittels der mit der Zahlungsanweisung empfangenen Hash-Schlüsseldaten gesucht wird, oder
alle oben aufgeführten Schritte und zusätzlich die Schritte des dritten Rechners nach den Ansprüchen 2 bis 5.

## Revendications

1. Méthode de communication de données de contenu depuis un premier ordinateur (3) d'un serveur de contenu (13) vers un deuxième ordinateur (4) d'un utilisateur de contenu (14) selon une communication poste à poste, la méthode comprenant :
l'enregistrement de données de gestion personnelles concernant ledit utilisateur de contenu (14) à l'aide d'un troisième ordinateur (5), lesdites données de gestion concernant ledit utilisateur de contenu étant communiquées dudit deuxième ordinateur (4) audit troisième ordinateur (5),
l'enregistrement de données de gestion personnelles concernant ledit fournisseur de contenu (13) et de données de gestion de contenu concernant lesdites données de contenu avec ledit troisième ordinateur (5), lesdites données de gestion personnelles concernant ledit fournisseur de contenu et lesdites données de gestion de contenu étant communiquées dudit premier ordinateur (3) audit troisième ordinateur (5), les données de gestion de contenu contenant des données de clé de hachage desdites données de contenu générées à l'aide d'une fonction de hachage prédéterminée en tant que données de vérification indiquant la légitimité des données de contenu fournies par ledit fournisseur de contenu, et
la communication desdites données de contenu dudit premier ordinateur (3) dudit fournisseur de contenu (13) audit deuxième ordinateur (4) dudit utilisateur de contenu (14) selon une communication poste à poste,
la réception par ledit troisième ordinateur (5), en provenance dudit second ordinateur (4) dudit utilisateur de contenu (14), d'une demande de renseignement comprenant des données de clé de hachage générées par ledit deuxième ordinateur (4) selon ladite fonction de hachage prédéterminée,
la vérification par ledit troisième ordinateur (5) de la légitimité desdites données de contenu en utilisant lesdites données de clé de hachage enregistrées en réponse à ladite demande de renseignement,
la transmission du résultat de la vérification afférente audit deuxième ordinateur (4),
la communication au troisième ordinateur (5), à partir dudit deuxième ordinateur (4) dudit utilisateur de contenu (14), d'une demande de paiement d'un prix audit fournisseur de contenu (13) lorsque ledit utilisateur de contenu (13) souhaite utiliser lesdites données de contenu, et
l'utilisation dudit troisième ordinateur (5), en réponse à ladite demande de paiement, pour servir d'intermédiaire audit paiement du prix dudit utilisateur de contenu (14) audit fournisseur de contenu (13), en fonction des données de gestion personnelles enregistrées et des données de gestion de contenu enregistrées ; dans lequel
ladite demande de paiement comprend lesdites données de clé de hachage et ladite étape d'utilisation dudit troisième ordinateur (5) pour servir d'intermédiaire au paiement du prix dudit fournisseur de contenu (13) audit utilisateur de contenu (14) utilisant lesdites données de gestion de contenu comprend
la recherche du fournisseur de contenu (13) à l'aide des données de clé de hachage comprises dans lesdites données de gestion de contenu enregistrées et les données de clé de hachage reçues avec la demande de paiement.

2. Méthode de communication selon la revendication 1, comprenant en outre l'étape consistant à gérer à l'aide dudit troisième ordinateur (5) le montant total payé par rapport à chaque donnée de contenu en utilisant lesdites données de gestion de contenu.

3. Méthode de communication selon la revendication 1, dans laquelle ledit enregistrement desdites donnée de gestion de contenu dans ledit troisième ordinateur (5) comprend les étapes de :
réception par ledit troisième ordinateur (5) desdites données de contenu émises par ledit premier ordinateur (3) et
production et enregistrement par ledit troisième ordinateur (5) desdites données de clé de hachage desdites données de contenu reçues en fonction de ladite fonction de hachage.

4. Méthode de communication selon la revendication 1, comprenant en outre l'étape de réception par ledit troisième ordinateur (5) desdites données de clé de hachage desdites données de contenu produites par ledit premier ordinateur (3) en fonction de la dite fonction de hachage dudit premier ordinateur (4) et l'enregistrement de celles-ci.

5. Méthode de communication selon la revendication 1, comprenant en outre l'étape de communication par ledit troisième ordinateur (5) avec lesdits premier ordinateur (3) et deuxième ordinateur (4) par le biais d'un réseau.

6. Ordinateur agencé pour communiquer avec un premier ordinateur (3) d'un fournisseur de contenu (13) et un deuxième ordinateur (4) d'un utilisateur de contenu (14), pour faciliter la communication de données de contenu dudit premier ordinateur (3) dudit fournisseur de contenu (13) audit deuxième ordinateur (4) dudit utilisateur de contenu (14) en fonction d'une communication poste à poste, l'ordinateur comprenant :
un moyen de stockage (22, 23, 24) pouvant être utilisé
pour stocker des données de gestion personnelles concernant ledit utilisateur de contenu, lesdites données de gestion personnelles concernant ledit utilisateur de contenu étant communiquées dudit deuxième ordinateur (4) audit ordinateur (5),
pour stocker des données de gestion personnelles concernant ledit fournisseur de contenu, lesdites données de gestion personnelles concernant ledit fournisseur de contenu étant communiquées dudit premier ordinateur (3) audit ordinateur (5), et
pour stocker des données de gestion de contenu concernant lesdites données de contenu, lesdites données de gestion de contenu étant communiquées dudit premier ordinateur (3) audit ordinateur (5), les données de gestion de contenu contenant des données de clé de hachage desdites données de contenu produites en utilisant une fonction de hachage prédéterminée comme données de vérification indiquant la légitimité des données de contenu fournies par ledit fournisseur de contenu (13),
une interface (21) pour recevoir, en provenance dudit deuxième ordinateur (4) dudit utilisateur de contenu (14), une demande de renseignement comprenant des données de clé de hachage desdites données de contenu, lesquelles données de contenu ont été reçues par ledit deuxième ordinateur (4) dudit premier ordinateur (14) selon une communication poste à poste, les données de clé de hachage ayant été produites par ledit deuxième ordinateur (4) selon ladite fonction de hachage prédéterminée, et
des moyens de contrôle (25) pouvant être utilisés
pour vérifier la légitimité desdites données de contenu en comparant lesdites données de clé de hachage enregistrées dans ledit moyen de stockage avec lesdites données de clé de hachage reçues avec ladite demande de renseignement,
pour transmettre, en association avec ladite interface (21), le résultat de la vérification afférente audit deuxième ordinateur (4) et, en réponse à la réception d'une demande de paiement du prix audit fournisseur de contenu (13) lorsque ledit utilisateur de contenu (14) souhaite utiliser lesdites données de contenu reçues par ladite interface (21) en provenance dudit deuxième ordinateur (4),
pour servir d'intermédiaire audit paiement du prix dudit utilisateur de contenu (14) audit fournisseur de contenu (13), en fonction des données de gestion personnelles et des données de gestion de contenu stockées dans ledit moyen de stockage (22, 23, 24) ; dans lequel
ladite demande de paiement comprend les données de clé de hachage et ledit moyen de contrôle (25) peut être utilisé
pour rechercher le fournisseur de contenu utilisant les données de clé de hachage stockées dans ledit moyen de stockage (22, 23, 24) avec lesdites données de gestion de contenu et lesdites données de clé de hachage reçues avec ladite demande de paiement.

7. Ordinateur selon la revendication 6, dans lequel ledit moyen de contrôle (25) gère le montant total payé pour chaque donnée de contenu à l'aide desdites données de gestion de contenu.

8. Ordinateur selon la revendication 6, dans lequel ladite interface (21) reçoit lesdites données de contenu en provenance dudit premier ordinateur (3) et
ledit moyen de contrôle (25) produit et enregistre lesdites données de clé de hachage desdites données de contenu reçues en fonction de ladite fonction de hachage et les stocke dans ledit moyen de stockage (23).

9. Ordinateur selon la revendication 8, dans lequel :
ladite interface reçoit lesdites données de clé de hachage desdites données de contenu produites par ledit premier ordinateur (3) en fonction de ladite fonction de hachage dudit premier ordinateur (3) et
ledit moyen de contrôle (25) enregistre lesdites données de clé de hachage reçues et les stocke dans le même moyen de stockage (23).

10. Programme informatique qui, lorsqu'il est exécuté par un ordinateur, fait effectuer les étapes suivantes audit ordinateur :
la communication avec un premier ordinateur (3) d'un fournisseur de contenu (13) et un deuxième ordinateur (4) d'un utilisateur de contenu (14), pour faciliter la communication de données de contenu en provenance dudit premier ordinateur (3) dudit fournisseur de contenu (13) audit deuxième ordinateur (4) dudit utilisateur de contenu (14) en fonction d'une communication poste à poste
le stockage de données de gestion personnelles concernant ledit utilisateur de contenu, lesdites données de gestion personnelles concernant ledit utilisateur de contenu étant communiquées dudit deuxième ordinateur (4) audit ordinateur (5),
le stockage de données de gestion personnelles concernant ledit fournisseur de contenu, lesdites données de gestion personnelles concernant ledit fournisseur de contenu étant communiquées dudit premier ordinateur (3) audit ordinateur (5), et
le stockage de données de gestion de contenu concernant lesdites données de contenu, lesdites données de gestion de contenu étant communiquées dudit premier ordinateur (3) audit ordinateur (5), les données de gestion de contenu contenant des données de clé de hachage desdites données de contenu produites en utilisant une fonction de hachage prédéterminée comme données de vérification indiquant la légitimité des données de contenu fournies par ledit fournisseur de contenu (13),
la réception, en provenance dudit deuxième ordinateur (4) dudit utilisateur de contenu (14), d'une demande de renseignement comprenant des données de clé de hachage desdites données de contenu, lesquelles données de contenu ont été reçues par ledit deuxième ordinateur (4) dudit premier ordinateur (14) selon ladite communication poste à poste, les données de clé de hachage ayant été produites par ledit deuxième ordinateur (4) selon ladite fonction de hachage prédéterminée, et
la vérification de la légitimité desdites données de contenu en comparant lesdites données de clé de hachage enregistrées dans ledit moyen de stockage avec lesdites données de clé de hachage reçues avec ladite demande de renseignement,
la transmission du résultat de la vérification afférente audit deuxième ordinateur (4) et, en réponse à la réception d'une demande de paiement d'un prix audit fournisseur de contenu (13) lorsque ledit utilisateur de contenu (14) souhaite utiliser lesdites données de contenu reçues par ladite interface (21) dudit deuxième ordinateur (4),
servir d'intermédiaire audit paiement du prix dudit utilisateur de contenu (14) audit fournisseur de contenu (13), en fonction des données de gestion personnelles et des données de gestion de contenu stockées ; dans lequel
ladite demande de paiement comprend les données de clé de hachage et
la recherche du fournisseur de contenu utilisant les données de clé de hachage stockées avec lesdites données de gestion de contenu et lesdites données de clé de hachage reçues avec ladite demande de paiement ; ou
toutes les étapes précédentes et en outre les étapes du troisième ordinateur selon les revendications 2 à 5.
